# EUROPEAN PATENT APPLICATION

(11) **EP 1 630 085 A1**
(43) Date of publication of application: **01.03.2006**
(21) Application number: 05076691.4
(22) Date of filing: 22.07.2005
(51) Int. Cl.: B62J 39/00

(54) **Mobile bike kit (waterproof) system for wireless communications on a bike**

(71) Applicant: Hagenbeek, Cindy Epona, 2242HJ Wassenaar (NL)
(72) Inventor: Hagenbeek, Cindy Epona, 2242HJ Wassenaar (NL)

(57) **Abstract**

The invention is a wireless communication system on a bike. Such a system already exits for cars - the car kit. This system concerns a system for wireless communications on a bike, the Mobile Bike Kit. This invention is a system placed on the bike itself and enables you to communicate and bike at the same time in a safe way with both hands on the steeringwheel whenever using this system. The Mobile Bike Kit is waterproof and can work on dynamo. The Mobile Bike Kit is universal..

## Description

The invention is a wireless communication system on a bike. Such a system already exits for cars - the car kit. This system concerns a system for wireless communications on a bike, the Mobile Bike Kit. This invention is a system placed on the bike itself and enables you to communicate and bike at the same time in a safe way with both hands on the steeringwheel whenever using this system.

## Claims

1. Any wireless communication system placed on a bike

2. A system as claimed in Claim 1 for mobile phones - the Mobile Bike Kit

3. A kit as claimed in any of Claims 1 to 3 in wich the kit is waterproof and also has a extendable - retracktable mechanism
